# EUROPÄISCHE PATENTSCHRIFT

(11) **EP 1 406 777 B1**
(45) Veröffentlichungstag und Bekanntmachung des Hinweises auf die Patenterteilung: **01.12.2004**
(21) Anmeldenummer: 03747093.7
(22) Anmeldetag: 27.03.2003
(51) Int. Cl.: B60J 7/14

(54) **ÖFFNUNGSFÄHIGES HARDTOP-FAHRZEUGDACH**
RETRACTABLE HARDTOP VEHICLE ROOF
TOIT OUVRANT RIGIDE DE VEHICULE

(30) Priorität: 26.04.2002 DE 10218885
(43) Veröffentlichungstag der Anmeldung: 14.04.2004
(73) Patentinhaber: CTS Fahrzeug-Dachsysteme GmbH, 21079 Hamburg (DE)
(72) Erfinder: HAHN, Gerald, 21149 Hamburg (DE); BORK, Henryk, 21033 Hamburg (DE)
(74) Vertreter: Müller, Gottfried
(86) Internationale Anmeldenummer: PCT/EP2003/003159
(87) Internationale Veröffentlichungsnummer: WO 2003/091052

(56) Entgegenhaltungen:
- WO-A-01/79011
- DE-A- 19 936 252

## Beschreibung

Die Erfindung bezieht sich auf ein Hardtop-Fahrzeugdach mit mindestens zwei Dachteilen nach dem Oberbegriff des Anspruches 1.

Ein Hardtop-Fahrzeugdach ist in der Druckschrift DE 198 07 490 C1 offenbart. Das Fahrzeugdach besteht aus zwei in sich starren Dachteilen, die in Schließposition des Daches, in welcher der Fahrzeuginnenraum überdeckt ist, in einer gemeinsamen Dachebene hintereinander liegend angeordnet sind. Zur Überführung in die Öffnungsposition wird das Dach durch Betätigung der Dachkinematik in einem heckseitigen Stauraum abgelegt; hierbei wird das hintere Dachteil um eine karosseriefeste Schwenkachse nach hinten geklappt und das vordere Dachteil relativ zum hinteren Dachteil eingeschwenkt.

Um ein kompaktes Ablagemaß zu erreichen, wird in Ablagestellung die Heckscheibe relativ zum hinteren Dachteil aus ihrer Dichtposition in der Ebene des hinteren Dachteils verschwenkt und nimmt eine gegenüber dem hinteren Dachteil nach oben ausgelenkte Position ein, wodurch der frei nutzbare Kofferraum vergrößert wird. Die Heckscheibe ist gelenkig im hinteren Dachteil aufgenommen und wird mit Hilfe eines karosseriefesten Steuerhebels aus ihrer Dichtposition in die ausgelenkte Position verschwenkt. Die Relativbewegung zwischen Heckscheibe und hinterem Dachteil ist als zwangsgeführte Bewegung in Abhängigkeit der Öffnungsbewegung des Fahrzeugdaches ausgeführt.

Die Relativbewegung zwischen Heckscheibe und hinterem Dachteil ist als reine Drehbewegung konzipiert, bei der in Ablageposition die Ebene der Heckscheibe mit der Ebene des hinteren Dachteiles einen Relativwinkel einschließt. Der durch die Drehbewegung der Heckscheibe gewonnene zusätzliche Kofferraum besitzt die Form eines spitzwinkligen Sektors, so dass insbesondere in dem Bereich benachbart zur Kofferraumrückwand nur ein sehr geringer zusätzlicher Stauraum gewonnen wird.

Aus der gattungsgemäßen Druckschrift DE 199 32 503 C2 ist ein Hardtop-Fahrzeugdach mit zwei starren Dachteilen bekannt, wobei im hinteren Dachteil eine bewegliche Heckscheibe angeordnet ist, die aus ihrer Schließposition, welche der geschlossenen Fahrzeugdachposition zugeordnet ist, in eine geöffnete Position zu verstellen ist, welche der Ablageposition des Daches entspricht. Die Heckscheibe ist über ein heckseitiges Drehgelenk schwenkbar mit einem unteren Querrahmen des hinteren Dachteiles verbunden. Im oberen Bereich ist die Heckscheibe über eine Kulissenführung mit den seitlichen C-Säulen des hinteren Dachteiles gekoppelt. Diese Kulissenführung umfasst einen Dreieckslenker, der schwenkbar mit einer C-Säule verbunden ist und außerdem mit einem Gleitstift in eine Kulissenbahn einragt, welche fest an der Heckscheibe angeordnet ist. Bei einem Verschwenken der Heckscheibe um das Drehgelenk am unteren Querrahmen des hinteren Dachteiles wird zwangsläufig das Gleitelement am Dreieckshebel in der Kulissenbahn geführt. Hierdurch sollen verschiedene Öffnungspositionen der hinteren Heckscheibe eingestellt werden können.

Aufgrund der Schwenkachse der Heckscheibe am unteren Querrahmen des hinteren Dachteiles ist die Bewegungsmöglichkeit der Heckscheibe gegenüber dem hinteren Dachteil fest vorgegeben. Die Heckscheibe kann nur um ihr Drehgelenk verschwenken. Die Kulissenführung hat lediglich die Aufgabe, verschiedene Öffnungspositionen der hinteren Heckscheibe festzulegen.

Aus der Druckschrift DE 199 36 252 A1 ist ein zweiteiliges Hardtop bekannt, dessen hinteres Dachteil seitliche C-Säulen aufweist, zwischen denen sich in Schließposition des Fahrzeugdaches eine Heckscheibe erstreckt. Diese Heckscheibe ist einenends über einen Gelenkhebel, der fest mit der Heckscheibe verbunden ist, schwenkbar an der Fahrzeugkarosserie gelagert und anderenends über einen weiteren Gelenkhebel, der zwei Drehgelenke umfasst, schwenkbar an einem Lenker der Gelenkkinematik gehalten, über die die Hardtop-Dachteile zwischen ihren Endlagen zu verstellen sind. Bei der Ablagebewegung des Fahrzeugdaches führt die Heckscheibe eine Kreisbewegung um ihr karosserieseitiges Drehgelenk aus. Die Drehgelenke der Lenker der Gelenkkinematik und das karosserieseitige Drehgelenk der Heckscheibe weisen einen Abstand zueinander auf, was bei der Ablagebewegung des Daches zu unterschiedlichen Drehbewegungen zwischen Heckscheibe und den Lenkern der Gelenkkinematik und somit zu einer Relativbewegung zwischen der Heckscheibe gegenüber den Lenkern führt. Der obere Gelenkhebel bewirkt eine Zwangsführung des oberen Abschnittes der Heckscheibe relativ zu den Lenkern.

Bei diesem Fahrzeugdach ist die Heckscheibe unmittelbar an der Fahrzeugkarosserie schwenkbar gelagert. Die Ablagebewegung der Hardtop-Dachteile hängt von der Heckscheibenablagebewegung ab, da die Dachteile über die Heckscheibe eine zusätzliche kinematische Bindung an die Fahrzeugkarosserie haben.

Auch aus der Druckschrift WO 01/79011 A1 ist ein Hardtop-Fahrzeugdach mit zwei Dachteilen bekannt, dessen hinteres Dachteil eine Heckscheibe aufweist, die über einen vorderen und einen hinteren Heckscheibenlenker relativ zum hinteren Dachteil zu verschwenken ist, wobei die Heckscheibenlenker schwenkbar an der Fahrzeugkarosserie angeschlagen sind.

Der Erfindung liegt das Problem zu Grunde, ein Hardtop-Fahrzeugdach mit einer verstellbaren Heckscheibe mit einfachen Mitteln dahingehend weiterzubilden, dass bei abgelegtem Fahrzeugdach ein zusätzlicher, frei nutzbarer Kofferraum zur Verfügung steht.

Dieses Problem wird erfindungsgemäß mit den Merkmalen des Anspruches 1 gelöst. Die Unteransprüche geben zweckmäßige Weiterbildungen an.

Die Heckscheibenkinematik, über die die Heckscheibe relativ zum hinteren Dachteil bewegbar ist, umfasst eine Kulissenführung mit einer Kulissenbahn und einem in der Kulissenbahn geführten Gleitelement. Zur Überführung der Heckscheibe zwischen Dichtposition innerhalb des hinteren Dachteiles und einer gegenüber dem hinteren Dachteil ausgelenkten Position wird die Heckscheibe entlang der Kulissenbahn verschoben.

Über die Kulissenbahngestaltung ist eine sichere Führung der Heckscheibe in allen Bewegungsphasen bei der Verstellung des Fahrzeugdaches zwischen Schließ- und Ablageposition und der üblicherweise gleichzeitig stattfindenden Relativstellbewegung der Heckscheibe gegenüber dem hinteren Dachteil möglich. Die Kulissenbahn ermöglicht gegenüber bekannten Ausführungen aus dem Stand der Technik zusätzliche konstruktive und gestalterische Möglichkeiten, ohne die Zahl der mechanischen Freiheitsgrade zu erhöhen und bei einer geringstmöglichen Anzahl beweglicher Teile. Bei einer entsprechenden Wahl der Führungsbahn sind sowohl rein translatorische als auch rein rotatorische als auch gemischt translatorisch-rotatorische Stellbewegungen der Heckscheibe gegenüber dem hinteren Dachteil möglich.

Gemäß einer bevorzugten Weiterbildung ist vorgesehen, dass die Kulissenbahn in der Kulissenführung geradlinig ausgebildet ist und insbesondere für den Fall, dass die Kulissenbahn fest mit dem hinteren Dachteil verbunden ist, mit der Ebene des Dachteiles einen Winkel einschließt, beispielsweise 45°. In der geradlinigen Ausführung der Kulissenbahn wirken auf das Gleitelement, welches in der Bahn geführt ist, nur geringe Zwangskräfte, wodurch die Gefahr eines Verkantens des Gleitelementes in der Kulissenbahn reduziert ist. Der Winkeleinschluss zwischen Kulissenbahn und Ebene des Dachelementes ermöglicht ein Anheben der Heckscheibe gegenüber dem hinteren Dachteil.

Zweckmäßig ist zwischen der Heckscheibe und dem hinteren Dachteil zusätzlich zu der Kulissenführung noch eine weitere Anbindung gegeben, insbesondere ein Stellhebel, welcher einenends gelenkig mit dem hinteren Dachteil und anderenends gelenkig mit der Heckscheibe verbunden ist. Der Stellhebel erlaubt zusätzlich zur Kulissenführung ein Lösen der Heckscheibe aus ihrer Dichtstellung im hinteren Dachteil, so dass in ausgelenkter Position der Heckscheibe diese vollständig aus ihrem Sitz im hinteren Dachteil herausgelöst ist und über den Stellhebel und über die Kulissenführung in einer ausgelenkten Relativposition zum hinteren Dachteil gehalten wird. Da die Heckscheibe vollständig aus ihrer Dichtposition herausgehoben werden kann, ist im Vergleich zu Ausführungen aus dem Stand der Technik in Ablageposition des Fahrzeugdaches eine stärkere Anhebung bzw. Absenkung der Heckscheibe relativ zum hinteren Dachteil möglich, was zu einem größeren, frei zur Verfügung stehenden Kofferraumvolumen führt.

Die Relativstellbewegung der Heckscheibe gegenüber dem hinteren Dachteil wird zweckmäßig als zwangsgeführte, von der Dachbewegung abhängige Stellbewegung ausgeführt, wofür ein Steuerlenker vorgesehen sein kann, der zwischen Dachkinematik und Heckscheibenkinematik angeordnet ist. In einer bevorzugten Ausführung greift der Steuerlenker einenends gelenkig an dem Stellhebel an, welcher Teil der Heckscheibenkinematik ist, und anderenends am vorderen Dachteil, dessen Relativbewegung zum hinteren Dachteil über den Steuerhebel auf die Heckscheibenkinematik übertragen wird. Zusätzliche Antriebselemente für die Relativbewegung der Heckscheibe können entfallen.

Weitere Vorteile und zweckmäßige Ausführungen sind den weiteren Ansprüchen, der Figurenbeschreibung und den Zeichnungen zu entnehmen. Es zeigen:
- Fig. 1a: eine Seitenansicht auf ein zweiteiliges Hardtop-Fahrzeug mit einem vorderen und einem hinteren Dachteil, wobei in das hintere Dachteil eine Heckscheibe integriert ist, die zwischen einer in Fig. 1a dargestellten Dichtposition und einer relativ zum hinteren Dachteil ausgelenkten, der Ablageposition des Fahrzeugdaches zugeordneten Position zu verstellen ist,
- Fig. 1b: eine Ausschnittvergrößerung des Details Ib aus Fig. 1a, die den oberen Teil der Heckscheibenkinematik zwischen Heckscheibe und hinterem Dachteil zeigt,
- Fig. 1c: das Detail Ic aus Fig. 1a mit der Darstellung des unteren Teiles der Heckscheibenkinematik, die als Kulissenführung ausgebildet ist,
- Fig. 2a bis 2c: den Fig. 1a bis 1c entsprechende Darstellungen, jedoch zu Beginn der Überführungsbewegung des Fahrzeugdaches in Richtung Ablageposition,
- Fig. 3a bis 3c: das Fahrzeugdach in einer weiter fortgeschrittenen Stellung in Richtung Ablageposition,
- Fig. 4a bis 4c: das Fahrzeugdach in Ablageposition.

In den Figuren sind gleiche Bauteile mit gleichen Bezugszeichen versehen.

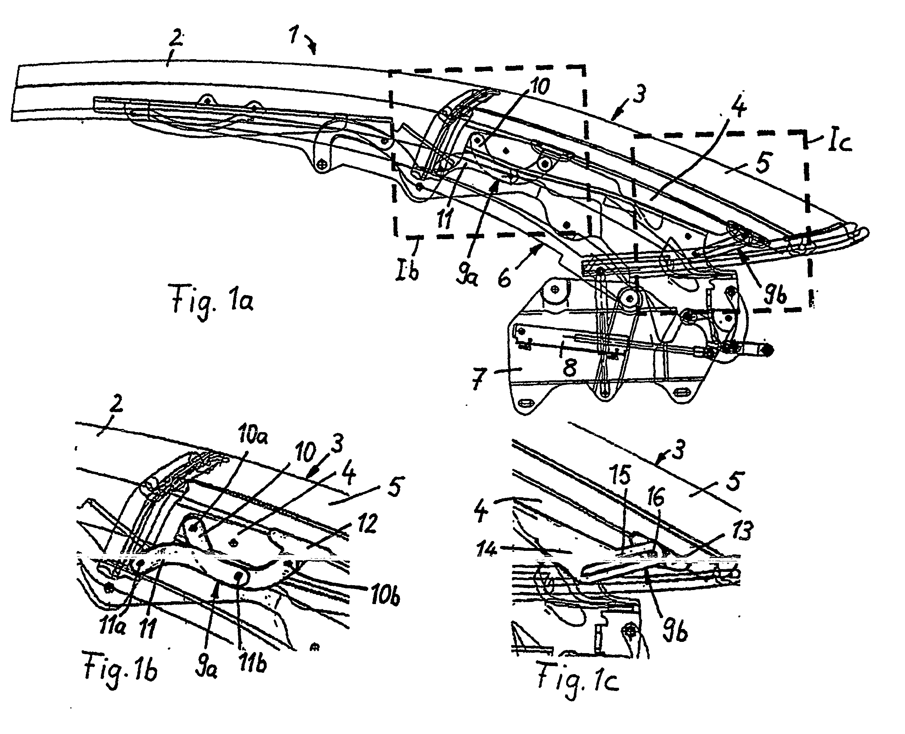

Bei dem in Fig. 1a dargestellten Fahrzeugdach 1 handelt es sich um ein Hardtop mit einem vorderen Dachteil 2 und einem hinteren Dachteil 3, welche in der in der Fig. 1a dargestellten Schließposition des Daches in einer gemeinsamen Dachebene in Fahrzeuglängsrichtung gesehen unmittelbar hintereinander liegend angeordnet sind. Das hintere Dachteil 3 umfasst seitliche C-Säulen 4, zwischen denen eine Heckscheibe 5 eingefasst ist. Über eine Dachkinematik 6, welche schwenkbar an einer karosseriefesten Konsole 7 angelenkt ist, sind die Dachteile 2 und 3 aus der gezeigten Schließposition in eine heckseitige Ablage- bzw. Öffnungsposition zu überführen. Die Überführung zwischen Schließ- und Ablageposition erfolgt mit Hilfe eines Stellelementes 8, welches ebenfalls an der Konsole 7 abgestützt ist und die Dachkinematik 6 beaufschlagt. Das Stellelement 8 ist insbesondere hydraulisch betätigbar ausgeführt.

Die Heckscheibe 5 ist über eine Heckscheibenkinematik beweglich an den C-Säulen 4 angelenkt, welche Teil des hinteren Dachteiles 3 sind. Die Heckscheibenkinematik umfasst einen oberen, dem vorderen Dachteil 2 benachbarten Teil 9a und einen unteren, der Heckseite benachbarten Teil 9b, wobei zur Verstellung der Heckscheibe 4 aus der gezeigten Dichtposition in eine gegenüber dem hinteren Dachteil 3 bzw. den C-Säulen 4 ausgelenkten Position sowohl der obere Teil 9a als auch der untere Teil 9b betätigt wird. Der obere Teil 9a ist als Gelenk- bzw. Heckscheibenkinematik mit einem Stellhebel 10 und einem Steuerhebel 11 ausgeführt, der untere Teil 9b ist als Kulissenführung ausgebildet.

Wie der Ausschnittvergrößerung gemäß Fig. 1b zu entnehmen, ist der Stellhebel 10, welcher Teil der oberen Heckscheibenkinematik 9a ist, als teilkreisförmige Schwinge ausgeführt, die beidenends gelenkig über Gelenke 10a und 10b gelagert ist. Im Bereich des Gelenkes 10a an einem Hebelende ist der Stellhebel 10 drehbar an der C-Säule 4 gelagert. Im Bereich des gegenüberliegenden Hebelendes ist der Stellhebel 10 über das Gelenk 10b drehbar an einer oberen Heckscheibenkonsole 12 gelagert, welche fest mit der Heckscheibe 5 verbunden ist.

Der Steuerhebel 11, welcher ebenfalls Teil der oberen Heckscheibenkinematik 9a ist, besitzt an einem Ende ein Gelenk 11a, über das der Steuerhebel 11 schwenkbar mit dem vorderen Dachteil 2 bzw. einem fest mit dem vorderen Dachteil 2 verbundenen Bauteil gekoppelt ist. Über den Steuerhebel 11 wird die Relativbewegung zwischen vorderem Dachteil 2 und hinterem Dachteil 3 bei der Überführung des Fahrzeugdaches zwischen Schließ- und Ablageposition auf die Heckscheibenkinematik übertragen, die daraufhin eine Relativbewegung zwischen Heckscheibe 5 und C-Säulen 4 erzeugt.

Wie der Ausschnittvergrößerung gemäß Fig. 1c zu entnehmen, umfasst der untere Heckscheibenkinematikteil 9b, der als Kulissenführung ausgebildet ist, einen fest mit der C-Säule 4 verbundenen Kulissenlenker 14, in welchen eine geradlinige Kulissenbahn 15 eingebracht ist, sowie eine untere Heckscheibenkonsole 13, die fest mit der Heckscheibe 5 verbunden ist und an der ein Zapfen 16 ausgebildet ist, der in die Kulissenbahn 15 einragt und ein Gleitelement bildet, das entlang der Kulissenbahn 15 verschiebbar und in dieser drehbar ist. In der Schließposition des Fahrzeugdaches, in welcher die Heckscheibe 5 sich zugleich in ihrer Dichtposition im hinteren Dachteil 3 befindet, liegt der Zapfen 16 der unteren Heckscheibenkonsole 13 an einem stirnseitigen Ende der Kulissenbahn 15 im Kulissenlenker 14 an. Zur Überführung in die ausgelenkte Position wird der Zapfen 16 entlang der Kulissenbahn 15 gleitend verschoben. Die geradlinig ausgeführte Kulissenbahn 15 schließt mit der Längsebene der C-Säule 4, an der der Kulissenlenker 14 fest angebunden ist, einen Winkel ein.

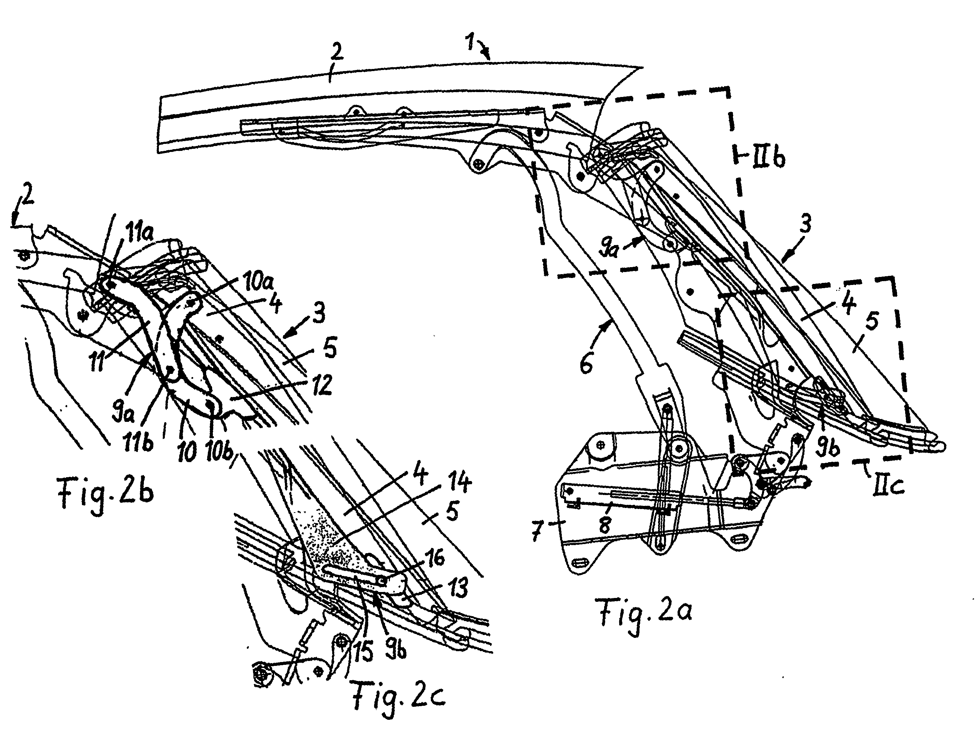

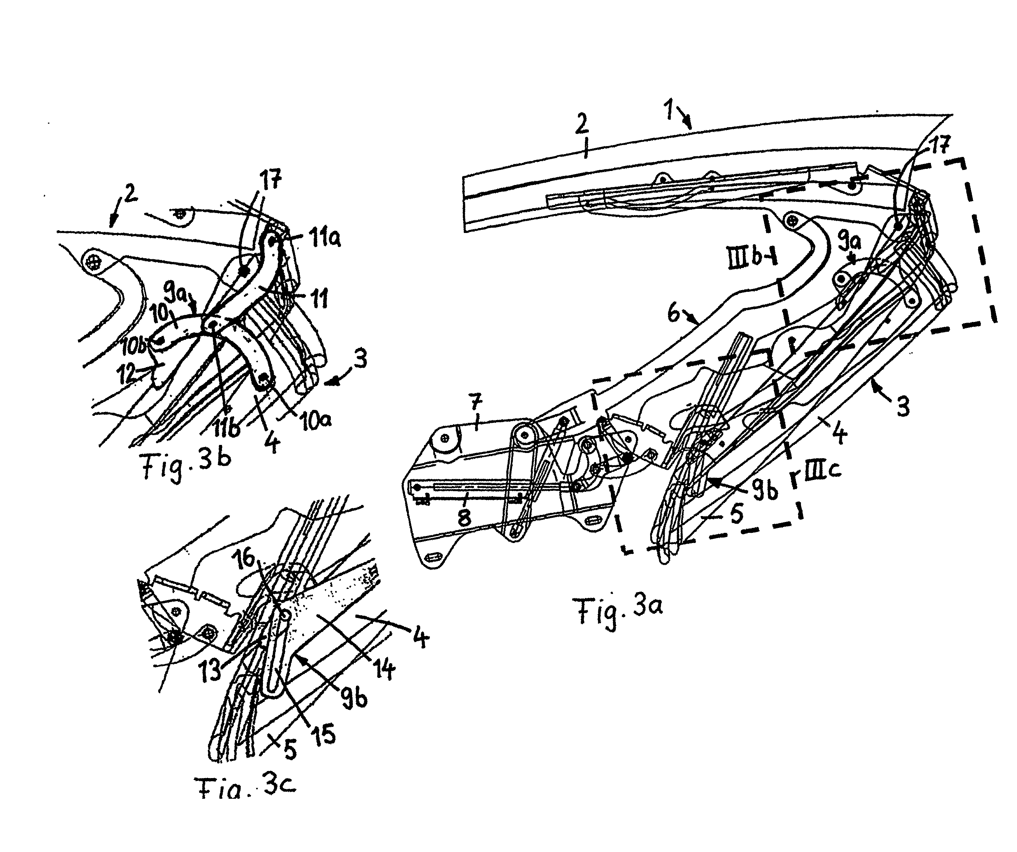

Die Fig. 2a bis 2c sowie 3a bis 3c stellen Zwischenpositionen des Fahrzeugdaches beim Übergang von Schließposition in Ablageposition dar. In der ersten Übergangsposition zu Beginn der Ablagebewegung gemäß den Fig. 2a bis 2c ist das Fahrzeugdach geringfügig geöffnet, die Heckscheibe 5 befindet sich aber noch nahe ihrer Dichtposition zwischen den C-Säulen 4. Die Relativbewegung zwischen vorderem Dachteil 2 und hinterem Dachteil 3 ist noch nicht weit fortgeschritten, so dass über den Steuerhebel 11 nur eine geringe Steuerbewegung auf den Stellhebel 10 übertragen wird. Der Zapfen 16 der unteren Heckscheibenkonsole 13 befindet sich in der Nähe seiner Endlage innerhalb der Kulissenbahn 15.

Beim Übergang von der Stellung des Fahrzeugdaches 1 gemäß den Fig. 2a bis 2c zu den Fig. 3a bis 3c bewirkt die Änderung der Relativposition zwischen vorderem Dachteil 2 und hinterem Dachteil 3 eine ausreichend hohe Steuerbewegung, die über den Steuerhebel 11 auf den Stellhebel 10 übertragen werden kann, woraufhin dieser eine Auslenkbewegung ausführt, wodurch die Heckscheibe 5 gegenüber den C-Säulen 4 eine Ausstellbewegung ausführt und vollständig aus ihrer Dichtposition herausgehoben wird. Die Ausstellbewegung wird aufgrund kinematischer Kopplung zwischen oberem Heckscheibenkinematikteil 9a und unterem Heckscheibenkinematikteil 9b - hergestellt über die Heckscheibe selbst oder einen Lenker zwischen den Teilen 9a und 9b - der Zapfen 16 entlang der Kulissenbahn in die gegenüberliegende, stirnseitige Endposition verschoben, so dass die Heckscheibe 5 sowohl im Bereich des oberen Heckscheibenkinematikteils 9a als auch im Bereich des unteren Heckscheibenkinematikteils 9b aus der Dichtposition zwischen den C-Säulen 4 ausgelenkt wird und eine gegenüber den C-Säulen verstellte, ausgelenkte Position einnimmt.

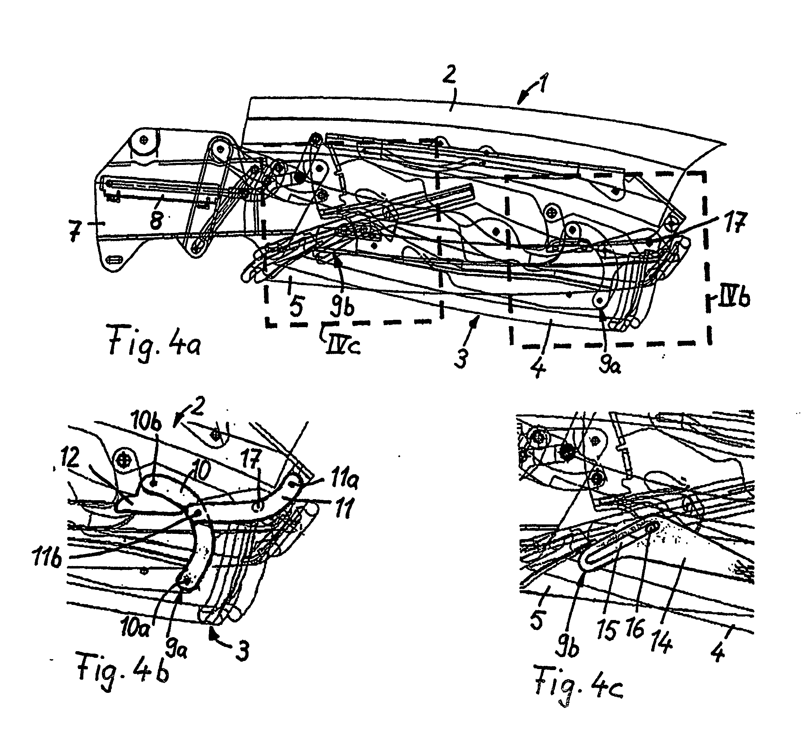

In der Ablageposition gemäß den Fig. 4a bis 4c liegt das hintere Dachteil 3 mit seiner Dachaußenseite nach unten gewandt zuunterst, das vordere Dachteil 2 liegt mit seiner Dachaußenseite nach oben gewandt auf dem hinteren Dachteil 3. Die Heckscheibe 5 ist gegenüber den seitlichen C-Säulen 4 in eine angehobene und in Fahrzeuglängsrichtung nach hinten verschobene Position ausgelenkt.

Beim Übergang von der fortgeschrittenen Überführungsstellung gemäß den Fig. 3a bis 3c zu der Ablagestellung gemäß den Fig. 4a bis 4c wird ein Gelenk 17, welches Teil der Dachkinematik ist und über das das vordere Dachteil 2 schwenkbar mit dem hinteren Dachteil 3 verbunden ist, in Bezug auf die Gelenke 11a und 11b des Steuerhebels 11 soweit abgesenkt, dass die Trajektorie des Gelenkes 17 bei der Überführung des Daches in Ablagestellung die verbindende Gerade zwischen den Gelenken 11a und 11b des Steuerhebels 11 schneidet, so dass der Steuerhebel 11 sich in Bezug auf das Gelenk 17 in einer Übertotpunktlage befindet. Das Überschreiten der Totpunktlage führt dazu, dass der Zapfen 16 in der Kulissenbahn 15 wieder um einen geringen Betrag zurückbewegt wird. Die Übertotpunktlage stellt eine kinematisch stabile Position dar, aus der die Heckscheibe nur durch Betätigung der Dachkinematik wieder entfernt werden kann.

## Patentansprüche

1. Hardtop-Fahrzeugdach, mit mindestens zwei Dachteilen (2, 3), die über eine Dachkinematik (6) zwischen einer den Fahrzeuginnenraum überdeckenden Schließstellung und einer Öffnungsstellung verstellbar sind, in der die Dachteile (2, 3) in einem heckseitigen Ablageraum abgelegt sind, und mit einer im hinteren Dachteil (3) angeordneten Heckscheibe (5), die über eine Heckscheibenkinematik (9a, 9b) relativ zum hinteren Dachteil (3) verstellbar ist, wobei die Heckscheibenkinematik (9a, 9b) eine Kulissenführung mit einer Kulissenbahn (15) und einem in der Kulissenbahn (15) geführten Gleitelement (16) umfasst und zur Überführung der Heckscheibe (5) zwischen einer Dichtposition innerhalb des hinteren Dachteils (3) und einer gegenüber dem hinteren Dachteil (3) ausgelenkten Position die Heckscheibe (5) entlang der Kulissenbahn (15) verschiebbar ist,
**dadurch gekennzeichnet,**
**dass** ein Steuerhebel (11) zwischen der Dachkinematik (6) und der Heckscheibenkinematik (9a, 9b) angeordnet ist, wobei über den Steuerhebel (11) die Heckscheibenbewegung an die Dachteilbewegung zwangsgekoppelt ist, dass die Heckscheibenkinematik (9a, 9b) einen Stellhebel (10) umfasst, der einenends gelenkig mit dem hinteren Dachteil (3) und anderenends gelenkig mit der Heckscheibe (5) verbunden ist, und dass der Steuerhebel (11) gelenkig mit dem Stellhebel (10) verbunden ist.

2. Hardtop-Fahrzeugdach nach Anspruch 1,
**dadurch gekennzeichnet,**
**dass** die Kulissenbahn (15) in einem mit dem hinteren Dachteil (3) verbundenen Kulissenlenker (14) ausgebildet ist und dass das Gleitelement (16) mit der Heckscheibe (5) verbunden ist.

3. Hardtop-Fahrzeugdach nach Anspruch 1 oder 2,
**dadurch gekennzeichnet,**
**dass** die Kulissenbahn (15) geradlinig ausgebildet ist.

4. Hardtop-Fahrzeugdach nach Anspruch 3,
**dadurch gekennzeichnet,**
**dass** die Kulissenbahn (15) mit der Dachebene des hinteren Dachteils (3) einen Winkel einschließt.

5. Hardtop-Fahrzeugdach nach einem der Ansprüche 1 bis 4,
**dadurch gekennzeichnet,**
**dass** der Stellhebel (10) und die Kulissenführung in Fahrzeuglängsrichtung gesehen hintereinander liegend angeordnet sind.

## Claims

1. Hardtop vehicle roof, having at least two roof parts (2, 3) which can be adjusted via roof kinematics (6) between a closed position covering the vehicle interior and an open position, in which the roof parts (2, 3) are stored in a rear storage compartment, and having a rear window (5) which is arranged in the rear roof part (3) and can be adjusted relative to the rear roof part (3) via rear-window kinematics (9a, 9b), the rear-window kinematics (9a, 9b) comprising a slotted-guide mechanism with a slot path (15) and a sliding element (16) guided in the slot path (15) and it being possible, in order to transfer the rear window (5) between a sealed position within the rear roof part (3) and a position deflected with respect to the rear roof part (3), for the rear window (5) to be displaced along the slot path (15), **characterized in that** a control lever (11) is arranged between the roof kinematics (6) and the rear-window kinematics (9a, 9b), the rear-window movement being positively coupled to the roof-part movement via the control lever (11), **in that** the rear-window kinematics (9a, 9b) has an adjusting lever (10) which is connected at one end in an articulated manner to the rear roof part (3) and at the other end in an articulated manner to the rear window (5), and **in that** the control lever (11) is connected in an articulated manner to the adjusting lever (10).

2. Hardtop vehicle roof according to Claim 1, **characterized in that** the slot path (15) is formed in a slot link (14) connected to the rear roof part (3), and **in that** the sliding element (16) is connected to the rear window (5).

3. Hardtop vehicle roof according to Claim 1 or 2, **characterized in that** the slot path (15) is of rectilinear design.

4. Hardtop vehicle roof according to Claim 3, **characterized in that** the slot path (15) encloses an angle with the roof plane of the rear roof part (3).

5. Hardtop vehicle roof according to one of Claims 1 to 4, **characterized in that** the adjusting lever (10) and the slotted-guide mechanism are arranged situated one behind the other as seen in the longitudinal direction of the vehicle.

## Revendications

1. Toit ouvrant rigide de véhicule comprenant au moins deux parties de toit (2, 3), qui peuvent être déplacées par le biais d'une cinématique de toit (6) entre une position de fermeture recouvrant l'habitacle du véhicule et une position d'ouverture dans laquelle les parties de toit (2, 3) sont rangées dans un espace de rangement du côté arrière, et comprenant une vitre arrière (5) disposée dans la partie de toit arrière (3), laquelle peut être déplacée par le biais d'une cinématique de vitre arrière (9a, 9b) par rapport à la partie de toit arrière (3), la cinématique de vitre arrière (9a, 9b) comprenant un guide de coulisse avec une piste de coulisse (15) et un élément coulissant (16) guidé dans la piste de coulisse (15), et pour le passage de la vitre arrière (5) entre une position hermétique à l'intérieur de la partie de toit arrière (3) et une position déviée par rapport à la partie de toit arrière (3), la vitre arrière (5) pouvant être déplacée le long de la piste de coulisse (15),
**caractérisé en ce qu'**
un levier de commande (11) est disposé entre la cinématique du toit (6) et la cinématique de la vitre arrière (9a, 9b), le levier de commande (11) accouplant par force le mouvement de la vitre arrière au mouvement de la partie de toit, **en ce que** la cinématique de la vitre arrière (9a, 9b) comprend un levier de commande (10) qui est connecté de manière articulée à une extrémité à la partie de toit arrière (3) et à l'autre extrémité à la vitre arrière (5), et **en ce que** le levier de commande (11) est connecté de manière articulée au levier de commande (10).

2. Toit ouvrant rigide de véhicule selon la revendication 1,
**caractérisé en ce que**
la piste de coulisse (15) est réalisée dans un bras de coulisse (14) connecté à la partie de toit arrière (3) et **en ce que** l'élément coulissant (16) est connecté à la vitre arrière (5).

3. Toit ouvrant rigide de véhicule selon la revendication 1 ou 2,
**caractérisé en ce que**
la piste de coulisse (15) est réalisée avec une forme rectiligne.

4. Toit ouvrant rigide de véhicule selon la revendication 3,
**caractérisé en ce que**
la piste de coulisse (15) forme un angle avec le plan du toit de la partie de toit arrière (3).

5. Toit ouvrant rigide de véhicule selon l'une quelconque des revendications 1 à 4,
**caractérisé en ce que**
le levier de commande (10) et le guide de coulisse sont disposés l'un derrière l'autre vu dans la direction longitudinale du véhicule.
